# EUROPÄISCHE PATENTSCHRIFT

(11) **EP 3 620 060 B1**
(45) Veröffentlichungstag und Bekanntmachung des Hinweises auf die Patenterteilung: **18.11.2020**
(21) Anmeldenummer: 18193500.8
(22) Anmeldetag: 10.09.2018
(51) Int. Cl.: A23C 20/00, A23C 19/09

(54) **VERFAHREN ZUM HERSTELLEN EINES VEGANEN LEBENSMITTELPRODUKTES, VEGANES LEBENSMITTELPRODUKT SOWIE VERWENDUNG**
METHOD FOR PREPARING A VEGAN FOOD PRODUCT, VEGAN FOOD PRODUCT, AND USE
PROCÉDÉ DE FABRICATION D'UNE DENRÉE ALIMENTAIRE VÉGANE, DENRÉE ALIMENTAIRE VÉGANE AINSI QU'UTILISATION

(43) Veröffentlichungstag der Anmeldung: 11.03.2020
(73) Patentinhaber: Hochland SE, 88178 Heimenkirch (DE)
(72) Erfinder: HERRMANN-BÜRK, Dirk Michael, 88279 Amtzell (DE); MAHLER, Marie-Luise, 88161 Lindenberg (DE)
(74) Vertreter: Patentanwälte Behrmann Wagner PartG mbB

(56) Entgegenhaltungen:
- WO-A1-99/29180
- DE-U1-202009 003 760
- US-A1- 2011 244 105
- US-A1- 2013 337 142
- DATABASE GNPD [Online] MINTEL; 8. Februar 2016 (2016-02-08), anonymous: "Grated Emmental-Style Cheese for Gratin", XP055533028, gefunden im www.gnpd.com Database accession no. 3775789
- Anonymous: Caramelization vs. Maillard reaction , 7. März 2016 (2016-03-07), XP002787442, Gefunden im Internet: URL:https://hedonistchocolates.com/blog/ca ramelization-vs-maillard-reaction/ [gefunden am 2018-12-14]
- DATABASE BIOSIS [Online] BIOSCIENCES INFORMATION SERVICE, PHILADELPHIA, PA, US; Januar 2006 (2006-01), GU YEUN SUK ET AL: "Properties of low moisture composite materials consisting of oil droplets dispersed in a protein-carbohydrate-glycerol matrix: Effect of continuous phase composition", XP002787443, Database accession no. PREV200600239138 & JOURNAL OF AGRICULTURAL AND FOOD CHEMISTRY, Bd. 54, Nr. 2, Januar 2006 (2006-01), Seiten 417-424, ISSN: 0021-8561
- LUND MARIANNE N ET AL: "Control of Maillard Reactions in Foods: Strategies and Chemical Mechanisms", JOURNAL OF AGRICULTURAL AND FOOD CHEMISTRY, Bd. 65, Nr. 23, 14. Juni 2017 (2017-06-14) , Seiten 4537-4552, XP002787444,
- DATABASE GNPD [Online] MINTEL; 1 June 2018 (2018-06-01), anonymous: "Vegan Grating Cheese", XP055603141, retrieved from www.gnpd.com Database accession no. 5715185
- M Fischer ET AL: "1 Lebensmittelinhaltsstoffe" In: "Moderne Lebensmittelchemie", 1 January 2015 (2015-01-01), Behr's Verlag, XP055695101, pages 164-165,

## Beschreibung

Die Erfindung betrifft ein Verfahren gemäß Anspruch 1 zum Herstellen eines veganen Lebensmittelproduktes, bevorzugt von veganem Käseersatz, wobei es sich ganz besonders bevorzugt um ein, vorzugsweise unter Schutzgasatmosphäre, endverpacktes Lebensmittelprodukt handelt. Das Lebensmittelprodukt umfasst mehrere gemeinsam in einer Verpackung verpackte, sich bevorzugt kontaktierende, d.h. berührende Lebensmittelkörper Die mehreren Lebensmittelkörper neigen jeweils zur Verklebung und sind gemeinsam in einer (End-)Verpackung verpackt., Erfindungsgemäß ist vorgesehen, dass die Lebensmittelkörper auf ihrer jeweiligen Außenseite mit einem Trennmittel versehen, insbesondere bemehlt sind, um die Verklebeneigung der Lebensmittelkörper in der gemeinsamen Verpackung zu verhindern bzw. die Klebeneigung zumindest deutlich zu reduzieren.

In der Lebensmitteltechnologie spielt die Maillardreaktion, auch nichtenzymatische Bräunungsreaktion genannt, eine große Rolle, zum Einen für die typische Braunfärbung von gerösteten, gebackenen oder gebratenen Lebensmittelprodukten und zum Anderen für das zugehörige typische Aroma. Bei der Maillardreaktion handelt es sich nicht um eine einzelne, bestimmte chemische Reaktion, sondern um eine komplexe Gesamtheit vieler Reaktionen, die zu einer Vielzahl von Reaktionsprodukten führen. Ein für die gewünschten Effekte hauptverantwortliches Reaktionsprodukt sind die sogenannten Melanoidine. Diese entstehen in Lebensmitteln immer dann, wenn Verbindungen mit freien Carbonylgruppen, wie z.B. reduzierenden Zuckern oder Lipidoxidationsprodukten oder Produkten aus dem Abbau von Polyphenolen (o-Chinone) und fermentativen Vorgängen (Methylglyoxal) mit Proteinen, Peptiden und/oder Aminosäuren gemeinsam erhitzt werden.

Typischerweise kommt es bei der Maillardreaktion in einer ersten Phase zur Bildung einer Aminoketose (Amadori-Produkt) und in einer zweiten Phase zur Bildung reaktiver Intermediate. In einer dritten Phase werden dann stabile Proteinmodifikationen bzw. hochpolymere farbige Melanoidine (Aromakomponenten) gebildet.

Zu beobachten ist die vorerwähnte Maillardreaktion, beispielsweise beim Überbacken von Lebensmitteln mit Käse. Dieser schmilzt dabei und nimmt die typische Braunfärbung mit entsprechender Aromaentwicklung an.

Bei Lebensmittelprodukten mit geringem Proteingehalt, insbesondere bei veganen Lebensmittelprodukten, wie beispielsweise veganem Analogkäse (veganer Ersatzkäse), sind Maillardreaktionseffekte mangels entsprechender Reaktanden gering. Es bestehen jedoch Bestrebungen, die Eigenschaften von proteinreichen Lebensmittelprodukten, in der Regel tierischen Ursprungs, wie beispielsweise Käse auf Milchbasis nachzuahmen. Hierzu müssten dem Lebensmittelprodukt die Reaktanden, das heißt Prekursoren (Maillardreaktionsprekursoren) als Basis für eine gewünschte Maillardreaktion zugesetzt werden. Da bei derartigen, insbesondere veganen Lebensmittelprodukten während des Herstellungsprozesses häufig mindestens ein Erhitzungsschritt inbegriffen ist, bei welchem beispielsweise eine aus einer Vielzahl von Zutaten bestehende Grundmasse, in der Regel neben einer mechanischen Bearbeitung erhitzt wird, würde dies bereits während der Herstellung des Lebensmittelproduktes die Maillardreaktion mit entsprechenden Reaktionsprodukten (unter anderem Braunfärbung sowie Aroma) zur Folge haben. Dies ist jedoch nicht erwünscht - vielmehr soll der Verbraucher solche, insbesondere veganen, Lebensmittelprodukte mit geringem Proteinanteil nutzen können wie deren "natürliche" Vorbilder mit hohem, meist tierischem Proteinanteil, die in einem, in der Regel hellen, wenig aromatischen Zustand gekauft werden und die dann vom Kunden, beispielsweise beim Überbacken einem Maillardreaktionsprozess unterzogen werden .

Aus der EP 2 798 964 A1 ist eine Lebensmittelbräunungsbeschichtung für proteinhaltige Lebensmittel bekannt, wobei die Beschichtung mindestens ein Reduktionsmittel, insbesondere einen reduzierenden Zucker umfasst sowie einen Reaktionsvermittler. Die bekannte Lebensmittelbräunungsbeschichtung wird im Rahmen eines industriellen Fertigungsprozesses auf eine proteinhaltige, noch zu erhitzende Masse gegeben, wobei die Masse daraufhin als Teil des industriellen Fertigungsprozesses zusammen mit der Bräunungsbeschichtung erhitzt wird, um somit eine Braunfärbung durch Maillardreaktion zu erhalten. Das fertige, braun gefärbte Lebensmittelprodukt wird dann an den Endkunden ausgeliefert. Gerade eine solche Braunfärbung während der industriellen Fertigung soll jedoch vorliegend, insbesondere bei der Herstellung von veganem Käseersatz vermieden werden.

Die DE 20 2009 003 760 U1 beschreibt einen veganen Analogkäse mit einem Proteingehalt von 0 Gew.-%. Reduzierende Zucker sind in dem veganen Produkt nicht enthalten.

Die US 2011/244 105 A1 beschreibt ein Verfahren zum Herstellen eines tierischen Käseproduktes, wobei ein Käsekörper mit einem tierischen Molkereipulver beschichtet wird.

Die WO 99/29180 A1 beschreibt ein tierisches, beschichtetes Käseprodukt, zu dessen Herstellung es ein Käsekörper erhitzt und im erhitzten, angeschmolzenen Zustand mit Bröseln versehen wird.
Zum weiteren Stand der Technik wird die US 2013/337 142 A1 genannt, die sich mit tierischen Lebensmitteln und dem verhindern von deren Verklebeneigung beschäftigt.

Aus DATABASE GNPD [Online, Mintel; 8. Februar 2016; anonymous: "Gated Emmental-Style Cheese for Gratin", XP055533028, gefunden im www.gnpd.com, Database accession no. 3775789] ist ein Ersatzprodukt bekannt. Das verpackte Produkt enthält Stärke sowie Erbsenprotein.

Aus DATABASE GNPD [Online, Mintel; 1. Juni 2018, anonymous: "Vegan Grating Cheese", XP055603141, gefunden im www.gnpd.com, Database accession no. 571518] ist ein veganes Ersatzkäseprodukt bekannt, das Stärke enthält sowie zur Farbgebung Apfelkonzentrat.

Aus der Website anonymous: Caramelization vs. Maillard reaction, sind im März 2016 (2016-03-07), XP002787442,
Gefunden im Internet:
URL: https://hedonistchocolates.com/blog/caramelization-vs-maillardreaction/ [gefunden am 2018-12-14] ist es grundsätzlich bekannt, dass eine Maillardreaktion auch bei veganen Lebensmitteln anwendbar ist.

Ausgehend von dem vorgenannten Stand der Technik liegt der Erfindung daher die Aufgabe zugrunde, ein verbessertes Verfahren zur Herstellung eines veganen Lebensmittelproduktes, aufweisend einen geringen Proteingewichtsanteil anzugeben, welches, bevorzugt erstmals bei einer Erhitzung durch den Verbraucher bräunt und typische Erhitzungsaromen ausbildet. Insbesondere soll sich das, bevorzugt verpackte Lebensmittelprodukt (nach dem Auspacken) zum Überbacken eignen. Insbesondere in einer Art, wie dies von typischem Reibkäse (Pizzakäse) auf Milchbasis bekannt ist. Ferner besteht die Aufgabe darin, ein entsprechend verbessertes veganes Lebensmittelprodukt mit einem Proteinanteil von max. 3 Gew.-% anzugeben, welches vom Verbraucher durch Erhitzen, insbesondere im Ofen, unter Ausbildung typischer Röstaromen gebräunt werden kann.

Diese Aufgabe wird hinsichtlich des Verfahrens mit den Merkmalen des Anspruchs 1 gelöst. Dabei wird aus mehreren Zutaten und unter Anwendung mindestens eines Erhitzungsschrittes zunächst eine Grundmasse hergestellt, bevorzugt unter Ausübung eines mechanischen Krafteintrags.

Bevorzugt wird die Grundmasse während mindestens eines Erhitzungsschrittes auf eine Temperatur oberhalb von 68°C erhitzt, ganz besonders bevorzugt auf eine Temperatur zwischen 68°C und 100°C, noch weiter bevorzugt zwischen 80°C und 90°C. Besonders bevorzugt wird die vorerwähnte Maximaltemperatur für mindestens 1s, vorzugsweise für eine Zeitspanne zwischen 10s und 300s gehalten.

Aus der Grundmasse werden Lebensmittelkörper, insbesondere durch Zerkleinern eines aus der Grundmasse zuvor gebildeten, bevorzugt ausgehärteten Grundkörpers geformt. Nach Formung des Grundkörpers, bevorzugt durch Abfüllen der noch fließfähigen, erhitzten Grundmasse, beispielsweise in Stangen oder Blöcken, erfolgt ein Kühlschritt zur Aushärtung und Ausbildung des Grundkörpers, der dann in die Vielzahl von Lebensmittelkörpern zerkleinert werden kann, beispielsweise durch eine Reibe- oder Schneidvorrichtung. Bevorzugt haben die Lebensmittelkörper die Form von Streifen, Stiften, Würfeln oder Scheiben, etc. Grundsätzlich möglich ist es ebenfalls die noch heiße Grundmasse unmittelbar in Lebensmittelkörperformen zu gießen und diese dann durch Kühlen auszuhärten. Wesentlich für das erfindungsgemäße Verfahren ist die Erzeugung einer vorzugsweise fließfähigen, erhitzten Grundmasse, aus der dann unmittelbar oder bevorzugt durch einen Zerkleinerungsvorgang eines zunächst ausgebildeten bei Raumtemperatur (22°C) nicht fließfähigen, d.h. ausgehärteten Grundkörpers die Lebensmittelkörper des Lebensmittelproduktes, häufig auch als Shreds bezeichnet, erzeugt bzw. geformt werden können. Die vorerwähnten Lebensmittelkörper werden in Gruppen mit jeweils mehreren Lebensmittelkörpern, die dann bevorzugt einander unmittelbar in der am Ende des Verpackungsvorgangs verschlossenen Verpackung, beispielsweise einer Beutel- oder Schalenverpackung kontaktieren, verpackt. Für den vorliegenden Fall, dass die Lebensmittelkörper zum Verkleben neigen, werden sie erfindungsgemäß nach dem Abkühlen mit einem, bevorzugt pulverförmigen, Trennmittel beaufschlagt. Der Prozessschritt, bei dem das pulverförmige Trennmittel aufgebracht wird, wird als Bemehlung bezeichnet. Bei dem Trennmittel handelt es sich bevorzugt um eine Stärke, wie beispielsweise Kartoffelstärke, Maisstärke und/oder Tapiokastärke und/oder um ein Mehl, wie beispielsweise Maismehl und/oder Reismehl. Die Funktion des Trennmittels ist die Reduzierung der Verklebeneigung von gemeinsam verpackten Lebensmittelkörpern des Lebensmittelproduktes. Verklebeneigung bedeutet, dass die einzelnen Lebensmittelkörper aneinander haften, sodass sie nicht durch leichte manuelle Bearbeitung wie schütteln oder auseinanderziehen voneinander getrennt werden können. Bevorzugt ist es, Trennmittel in einem Gewichtsanteil der zu einem Lebensmittelprodukt zusammengefassten Lebensmittelkörper zwischen 0,1 und 10 Gew.-% (bezogen auf das Gesamtgewicht des Lebensmittelproduktes), weiter bevorzugt zwischen 0,5 und 3 Gew.-%, ganz besonders bevorzugt von 1 Gew.-% einzusetzen.

Wesentlich für das erfindungsgemäße Verfahren ist der Zusatz eines ersten und mindestens eines davon unterschiedlichen zweiten Maillardreaktionsprekursors (Reaktanden), die sich dadurch auszeichnen, dass diese miteinander bei Wärmeeinwirkung im Rahmen einer Maillardreaktion zu zumindest einem Maillardprodukt, insbesondere zu Melanoidinen, bevorzugt nicht-enzymatisch, reagieren bzw. reagieren können. Wie später noch erläutert wird, handelt es sich bei dem ersten Maillardreaktionsprekursor um eine Verbindung mit freier Carbonylgruppe wie insbesondere einen reduzierenden Zucker und/oder um ein Lipidoxidationsprodukt und/oder ein Produkt aus dem Abbau von Polyphenolen und/oder fermentativen Vorgängen und bei dem zweiten Maillardreaktionsprekursor um eine Aminverbindung, vorzugsweise ein Protein, ein Peptid, eine Aminosäure und/oder ein Amin.

Ganz wesentlich für die Erfindung ist nun der Zeitpunkt der Zugabe von mindestens einem der Maillardreaktionsprekursoren. Der Erfindung liegt der Gedanke zugrunde, eine Maillardreaktion der zugesetzten Prekursoren während der Herstellung des Lebensmittelproduktes, insbesondere der Lebensmittelkörper bis zu deren Verpackung zumindest weitgehend zu verhindern. Die Erfindung hat erkannt, dass es hierzu sinnvoll ist, dass nicht beide Prekursoren gemeinsam einen Erhitzungsschritt, während bzw. zur Herstellung des Lebensmittelproduktes vor dessen Verpackung, insbesondere zur Herstellung der Grundmasse durchlaufen. Erfindungsgemäß ist daher vorgesehen, den ersten und den zweiten Maillardreaktionsprekursor erst nach Durchlaufen sämtlicher Erhitzungsschritte, d.h. frühestens nach Abkühlen der Grundmasse und/oder der daraus gebildeten Lebensmittelkörper auf eine Temperatur von unter 35°C, insbesondere auf eine Temperatur zwischen 0°C und 30°C, noch weiter bevorzugt zwischen 2°C und 10°C zuzusetzen. Anders ausgedrückt umfasst das erfindungsgemäße Verfahren mindestens einen Abkühlschritt zur Abkühlung der Grundmasse und/oder der daraus geformten Lebensmittelkörper auf eine Temperatur von unter 35°C, insbesondere zwischen 0°C und 30°C, ganz besonders bevorzugt zwischen 2°C und 10°C, damit eine Maillardreaktion zwischen dem ersten und dem zweiten Maillardreaktionsprekursor während der Herstellung des Lebensmittelproduktes, zumindest weitgehend, vorzugsweise vollständig unterbleibt. Anders ausgedrückt ist es erfindungswesentlich, dass der erste und der zweite Maillardreaktionsprekursor nicht gemeinsam während des, insbesondere industriellen, Produktionsprozesses erhitzt werden, sondern die beiden Prekursoren nach dem Herstellen der Grundmasse auf die mehreren, abgekühlten Lebensmittelkörper gegeben wird und zwar vor dem Verpacken, d.h. spätestens vor dem Schließen einer entsprechenden Verpackung, insbesondere einer Endverpackung, sodass die Maillardreaktionsprekursoren (noch) unreagiert in der Verpackung vorliegen, um dann vom Endkunden nach dem Auspacken der mehreren einander kontaktierenden Lebensmittelkörper erhitzt zu werden, beispielsweise zum Überbacken eines Gerichtes, wobei erst bei diesem Erhitzungsschritt, also erst beim Endkunden die Maillardreaktion herbei- bzw. durchgeführt wird, um dann den gewünschten Bräunungs- und Aromabildungseffekt zu erhalten. Erfindungsgemäß erfolgt die Zugabe des Trennmittels zur Reduzierung der Klebeneigung der Lebensmittelkörper zu den gemeinsam verpackten, einander in der Verpackung kontaktierenden Lebensmitelkörpern spätestens vor dem Verschließen der Verpackung, jedenfalls nach dem Kühlschritt. Erfindungsgemäß ist vorgesehen, dass die Zugabe beider Maillardreaktionsprekursoren gemeinsam mit dem Trennmittel in Form einer Trennmittel-Maillardreaktionsprekursormischung, die ganz besonders bevorzugt pulverförmig ist, erfolgt.

Erfindungsgemäß werden beide Maillardreaktionsprekursoren nach dem Abkühlen der Grundmasse den daraus hergestellten Lebensmittelkörpern während der Zugabe des Trennmittels, bevorzugt in Pulverform zugegeben bzw. außen auf diese aufgebracht. Erfindungsgemäß werden das Trennmittel und beide Maillardreaktionsprekursoren den Lebensmittelkörpern äußerlich zuzugeben, bevorzugt werden diese damit in einem gemeinsamen Verfahrens- bzw. Beschichtungs- bzw. Bemehlungsschritt versehen.
Das erfindungsgemäße Verfahren führt zu blassen bzw. bewusst wenig bis gar nicht (zumindest nicht maillardreaktions-)gebräunten Lebensmittelprodukten, jeweils umfassend eine Mehrzahl von gemeinsam endverpackten Lebensmittelkörpern, die an ihrer Außenseite, neben einem Trennmittel zwei unterschiedliche Maillardreaktionsprekursoren aufweisen und die erst bei entsprechender Erhitzung durch den Endverbraucher einen Maillardreaktionsprozess durchlaufen, bei dem der erste Maillardreaktionsprekursor mit dem zweiten Maillardreaktionsprekursor nicht-enzymatisch reagiert und dabei unter anderem eine oder mehrere Verbindungen aus der Gruppe der Melanoidine erzeugt wird.. So eignet sich das aus dem erfindungsgemäßen Verfahren resultierende Lebensmittelprodukt hervorragend zum Überbacken, in der Art, wie dies von normalen Käse-Shreds bzw. Pizzakäse bekannt ist.

Denkbar und bevorzugt ist es, Lebensmittelkörper in Form von Streifen oder Stiften zu erzeugen, insbesondere mit einer Dicke zwischen 0,05 cm und 0,3 cm und/oder einer Breite zwischen 0,2 cm und 0,6 cm und/oder einer Länge zwischen 3,0 cm und 6,5 cm. Wie erwähnt, ist es selbstverständlich denkbar, den Lebensmittekörpern andere Formen, wie beispielsweise eine Würfel- oder Scheibenform und/oder andere geometrische Abmessungen zu geben.

Ganz besonders bevorzugt wird die Grundmasse so hergestellt und das Verfahren so geführt, dass die Festigkeit der Lebensmittelkörper des Lebensmittelproduktes im Bereich der Festigkeit von geschnittenen Käsen aus Kuhmilch liegt. Ganz besonders bevorzugt ist es, wenn die Festigkeit zwischen 900 und 2800, ganz besonders bevorzugt zwischen 973 und 2735 liegt, gemessen mittels eines Texture Analyzers (Model TA-Hdi, Stable Micro Systems, Godalming, UK) mit einer 10 kg Kraftmesszelle, wobei die Festigkeit als die Kraft festgelegt ist, die benötigt wird, um eine festgelegte Deformation zu erzielen. In der Sensorik beschreibt die Festigkeit die Kraft, die benötigt wird, um den Käse mit den Backenzähnen bis zum Durchdringen zusammenzudrücken. Die Käseprobe wird für die Messung der Festigkeit in 5cmx1cm große Würfel geschnitten. Konkret beträgt die Eindringtiefe des einen Durchmesser von 25mm aufweisenden Kraftmesszylinders in die Probe (Lebensmittelkörper) 2cm, sobald eine minimal benötigte Kraft von 0,02g überschritten ist. Dies führt zur Deformation der Käseprobe. Die Proben wurden bei 4°C und 25°C gemessen, wobei bei niedriger Temperatur höhere Festigkeiten erzielt wurden. Alle Proben lagen im zuvor angegebenen Bereich.

Bevorzugt wird die Menge bzw. der Gewichtsanteil des ersten und zweiten Maillardreaktionsprekursors so gewählt, dass bei einer typischen Erhitzung des Lebensmittelproduktes bei einer Ofentemperatur oberhalb von 100°C, insbesondere von oberhalb 140°C, insbesondere einer Temperatur zwischen 180°C und 220°C über 5 Minuten eine Maillardaromakonzentration erreicht wird, die vom Verbraucher wahrnehmbar ist - anders ausgedrückt sollte die Prekursormenge so gewählt werden, dass nach einer zuvor erläuterten, typischen Erhitzung eine Maillardreaktionsaromakonzentration resultiert, die für einen Wahrnehmungsreiz durch einen Verbraucher ausreicht. Bevorzugt wird die Menge so gewählt, dass abhängig vom gewünschten Maillardaroma- und Geschmackseindruck eine Maillardaromakonzentration zwischen 5 und 2000 ppm bezogen auf das Gesamtgewicht des Lebensmittelsproduktes, bevorzugt zwischen 200 und 2000 oder zwischen 500 und 2000 ppm resultiert. Ganz besonders bevorzugt ist es, wenn die beiden Maillardreaktionsprekursoren in einer Menge zugegeben werden, dass deren jeweiliger Gewichtsprozentanteil am Lebensmittelprodukt zusammen zwischen 0,002 und 0.4 Gew.-%, insbesondere zwischen 0,14 und 0,2 Gew.-% beträgt. Die Maillardreaktionsprekursoren liegen bis zur Zubereitung des Kunden in angegebener Menge größtenteils unreagiert vor.

Vorteilhafte Ausgestaltungen der Erfindung sind in den Unteransprüchen angegeben. In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollten verfahrensgemäß offenbarte Merkmale auch als vorrichtungsgemäß offenbart gelten und beanspruchbar sein.

Besonders bevorzugt ist es, wenn der erste Maillardreaktionsprekursor mindestens eine (chemische) Verbindung mit einer freien Carbonylgruppe, insbesondere mindestens einen reduzierenden Zucker umfasst oder daraus besteht und dass der zweite Maillardreaktionsprekursor eine Aminverbindung umfasst oder daraus besteht. Es kann sich jeweils um sortenreine Verbindungen, das heißt beispielsweise ausschließlich Glukosemoleküle oder im Falle der zweiten Maillardreaktionsprekursor um bestimmte Proteine handeln - möglich und bevorzugt ist es jedoch für zumindest einen der Prekursoren Mischungen unterschiedlicher reduzierender Verbindungen, insbesondere Verbindungen mit jeweils einer freien Carbonylgruppe, bevorzugt mit mindestens einem reduzierenden Zucker bzw. im Falle des zweiten Maillardreaktionsprekursors, eine Mischung von Aminverbindungen einzusetzen.

Besonders bevorzugt ist es, wenn der erste Maillardreaktionsprekursor eine Verbindung oder mehrere unterschiedliche Verbindungen aus der folgenden Gruppe von Verbindungen umfasst oder daraus besteht: Glukose, Maltose, Fruktose, Laktose, Oligosaccharid, Pentose. Grundsätzlich handelt es sich bevorzugt um mindestens eine Verbindung mit freier Carbonylgruppe, wie vorzugsweise einem reduzierenden Zucker, wobei zusätzlich oder alternativ auch Lipidoxidationsprodukte und/oder Produkte aus dem Abbau von Polyphenolen und/oder fermentativen Vorgängen als Reduktionsmittel, d.h. erster Maillardreaktionsprekursor, zum Einsatz kommen können. Zusätzlich ist es bevorzugt, wenn der zweite Maillardreaktionsprekursor eine Verbindung oder mehrere unterschiedliche Verbindungen aus der folgenden Gruppe von Verbindungen umfasst oder daraus besteht: Protein, Peptid, Aminosäure, Amin.

Wie eingangs erwähnt, handelt es sich bei dem Lebensmittelprodukt bevorzugt um ein, ganz besonders bevorzugt veganes Lebensmittelprodukt mit einem Proteinanteil von maximal 15 Gew.-%. Das Lebensmittelprodukt umfasst, wie erwähnt, mehrere aus einer Grundmasse hergestellte, verpackte Lebensmittelkörper mit den zugegebenen, noch nicht miteinander reagierten Prekursoren. Die Grundmasse kann einen Proteingehalt von 0% enthalten, wobei durch Zugabe des zweiten Prekursors das Lebensmittelprodukt dann einen minimalen Proteingehalt von mindestens 0,002 Gew.-% aufweist. Dabei ist es vorteilhaft, wenn die Grundmasse und/oder das fertige Lebensmittelprodukt einen Proteingehalt von maximal 15 Gew.-%, ganz besonders bevorzugt einen Proteingehalt aus einem Wertebereich zwischen 0 Gew.-% und 3 Gew.-%, bevorzugt zwischen 1 und 3 Gew.-% enthält. Besonders bevorzugt ist es, wenn zusätzlich oder alternativ zum Proteingehalt der Stärkegehalt der Grundmasse und/oder des Lebensmittelproduktes zwischen 5 und 42 Gew.-%, bevorzugt zwischen 10 und 30 Gew.-%, weiter bevorzugt zwischen 18 und 24 Gew.-% beträgt und/oder der Fettgehalt von Grundmasse und/oder Lebensmittelprodukt aus einem Wertebereich zwischen 5 und 35 Gew.-%, insbesondere zwischen 10 und 35 Gew.-%, bevorzugt zwischen 20 und 25 Gew.-% gewählt wird. Der Salzgehalt der Grundmasse oder des Lebensmittelproduktes beträgt bevorzugt zusätzlich oder alternativ zu zumindest einer der vorgenannten Zutaten zwischen 1 und 5 Gew.-%, insbesondere zwischen 2 und 3 Gew.-%. Besonders zweckmäßig ist es, den Wassergehalt der Grundmasse und/oder des Lebensmittelproduktes auf einen Gewichtsprozentwert zwischen 35 und 75 Gew.-% einzustellen. Bei einer bevorzugten Ausführungsform des Lebensmittelproduktes mit veganen Käseersatzkörpern ist es zweckmäßig, sämtliche vorerwähnten Gewichtsprozentbereiche einzuhalten.
Bevorzugt werden sowohl der erste als auch der zweite Maillardreaktionsprekursor in Pulverform zugegeben, gemeinsam mit dem Trennmittel. Bevorzugt wird ein Gewichtsverhältnis zwischen Trennmittel und der Summe aus erstem und zweitem Maillardreaktionsprekursor zwischen 1/99 und 99/1 gewählt. Ganz besonders bevorzugt ist ein Verhältniswert 20/80, noch weiter bevorzugt ist ein Verhältniswert 30/70.
Als besonders zweckmäßig hat es sich herausgestellt, den ersten und/oder zweiten Maillardreaktionsprekursor auf mindestens einen pulverförmigen Trägerstoff, beispielsweise Maltodextrin appliziert zuzugeben. Alternativ zu Maltodextrin ist beispielsweise Natriumchlorid, Glucose, Saccharose und/oder Stärke als Trägerstoff einsetzbar. Ein Trägerstoff sorgt für die Stabilisierung und den Schutz des ersten und/oder zweiten Maillardreaktionsprekursors während der Überführung des jeweiligen Prekursors von einer flüssigen in eine feste, bevorzugt pulverartige Form, bevorzugt durch Trocknung, insbesondere Sprühtrocknung.
Bevorzugt trägt das Gewichtsanteilsverhältnis des ersten und/oder zweiten Maillardreaktionsprekursors zum zugehörigen Trägerstoff zwischen 60/40 und 98/2, bevorzugt zwischen 75/25 und 80/20.

Wie eingangs erwähnt ist vorgesehen, dass die Lebensmittelkörper vor der Zugabe des ersten und zweiten Maillardreaktionsprekursors eine Temperatur von weniger als 35 C, ganz besonders bevorzugt auf eine Temperatur aus einem Bereich zwischen 0°C und 30 C, weiter bevorzugt zwischen 2°C und 10 C aufweisen. Ganz besonders bevorzugt wird ein fakultativ zunächst aus der Grundmasse geformter Grundkörper, beispielsweise eine Stange oder ein Block vor dem Formen der Lebensmittelkörper aus dem Grundkörper durch Zerkleinerung des Grundkörpers, beispielsweise durch Reiben oder Schneiden, auf eine Temperatur aus dem vorerwähnten Temperaturbereich gekühlt, entweder aktiv in einer Kühlstrecke oder einem Kühlraum oder passiv, beispielsweise bei Raumtemperatur.

Wie erwähnt wird das Lebensmittelprodukt als verpacktes, insbesondere endverpacktes Lebensmittelprodukt hergestellt, also derart, dass die Lebensmittelkörper in Gruppen von sich kontaktierenden Lebensmittelkörpern nach Zugabe des ersten und zweiten Maillardreaktionsprekursors in ein, bevorzugt eine Sperreinrichtung gegen Feuchtigkeit und/oder Sauerstoff aufweisenden, bevorzugt in mindestens einer Kunststoffschicht und/oder einer Metallschicht umfassenden Verpackung, insbesondere einer Beutelverpackung verpackt werden, wobei es besonders bevorzugt ist, wenn das Verpacken in Schutzgas, beispielsweise Stickstoff erfolgt. Im verpackten Zustand der Lebensmittelkörper haben die zuvor zugegebenen ersten und zweiten Maillardreaktionsprekursoren massemäßig zumindest größtenteils nicht miteinander reagiert - anders ausgedrückt liegt der größte Teil, ganz besonders bevorzugt zumindest näherungsweise sämtlichen zugesetzten Maillardreaktionsprekursoren in nicht Maillardreagierter-Form vor, um dann vom Endkunden durch Erhitzen eine (erste) Maillardreaktion verursachen bzw. provozieren zu können. Bevorzugt werden die Lebensmittelkörper nach dem diese sowohl den ersten als auch den zweiten Maillardreaktionsprekursor aufweisen, insbesondere bis zum Verpacken und bevorzugt auch nicht mehr in der Verpackung auf eine Temperatur von oberhalb 35 C° erhitzt. Bevorzugt erfolgen der Transport und die Lagerung des Lebensmittelproduktes gekühlt, insbesondere beim Endkunden im Kühlschrank, ganz besonders bevorzugt bei Temperaturen von weniger als 10°C.

Zweckmäßig ist es, wenn der erste Maillardreaktionsprekursor in einer Menge zugegeben wird, dass der Gewichtsprozentanteil des ersten Maillardreaktionsprekursors am Lebensmittelprodukt zwischen 0,002 und 0,4 Gew.-%, insbesondere zwischen 0,14 Gew.-% und 0,2 Gew.-% beträgt und/oder dass der zweite Maillardreaktionsprekursor in einer Menge zugegeben wird, dass der Gewichtsprozentanteil des zweiten Maillardreaktionsprekursors am Lebensmittelprodukt zwischen 0,002 und 0,4 Gew.-%, insbesondere zwischen 0,14 und 0,2 Gew.-% beträgt. Da beide Maillardreaktionsprekursoren bei einer Herstellung des Lebensmittelproduktes erfindungsgemäß nicht einem gemeinsamen Erhitzungsschritt unterworfen werden, insbesondere nicht bis zum und/oder nicht nach dem Verpacken und ganz besonders bevorzugt auch nicht in der Verpackung bleibt dieser Gewichtsanteil im Endprodukt, zumindest weitgehend, im angegebenen Bereich.

Die Erfindung führt auch auf ein, bevorzugt mit einem zuvor offenbarten Verfahren hergestelltes, verpacktes veganes Lebensmittelprodukt, welches besonders bevorzugt endverpackt ist, das also die mehreren, Lebensmittelkörper des Lebensmittelproduktes, portionsweise (d.h. in Gruppen von sich kontaktierenden bzw. berührenden Lebensmittelkörpern), in einer Endverpackung verpackt sind, wie dies im Zusammenhang mit der Erläuterung des Verfahrens bereits offenbart wurde. Zur Vermeidung von Wiederholungen wird auf sämtliche, im Zusammenhang mit dem Verfahren erläuterten vorteilhaften Ausgestaltungen des Lebensmittelproduktes verwiesen, die auch unmittelbar im Zusammenhang mit dem erfindungsgemäßen Lebensmittelprodukt als offenbart gelten sollen, insbesondere auch sämtliche aus den offenbarten Verfahrensschritten resultierenden strukturellen Merkmale.
Es handelt sich bei dem Lebensmittelprodukt um ein Lebensmittelprodukt mit geringem Proteingehalt zwischen 0 Gew.-% und 3 Gew.-%. Es handelt sich um ein veganes Lebensmittelprodukt, bevorzugt um veganes Käseanalog. Das Lebensmittelprodukt ist aus einer erhitzten und wieder gekühlten Grundmasse hergestellt und umfasst aus dieser Grundmasse resultierende Lebensmittelkörper, bevorzugt in Streifen-, Stift-, Würfel- oder Scheibenform, deren Verklebeneigung erfindungsgemäß mittels eines zwischen den Lebensmittelkörpern befindlichen, bevorzugt pulverförmigen Trennmittels, ganz besonders bevorzugt auf Stärkebasis reduziert ist, wobei das Lebensmittelprodukt einen ersten und einen zweiten Maillardreaktionsprekursor enthält, die sich dadurch auszeichnen, dass diese miteinander bei Wärmeeinwirkung im Rahmen einer Maillardreaktion zumindest zu einem Maillardreaktionsprodukt, insbesondere aus der Gruppe der Melanoidine, reagieren können, wobei es wesentlich ist, für das erfindungsgemäße Lebensmittelprodukt, dass diese Maillardreaktion noch nicht erfolgt ist, das heißt die Prekursoren liegen in nicht miteinander reagierter Form in der geschlossenen Verpackung vor. Der erste und der zweite Maillardreaktionsprekursor befinden sich zusammen mit dem Trennmittel, außerhalb der Lebensmittelkörper, insbesondere zwischen diesen, und zwar innerhalb einer Verpackung, insbesondere einer Endverpackung.
Das erfindungsgemäße Lebensmittelprodukt verhält sich, was Bräunungsreaktionen angeht, wie bekannte Produkte tierischen Ursprungs, beispielsweise wie Kuhmilchkäse. Die Maillardreaktionsprekursoren, von denen zumindest einer bevorzugt in Pulverform, auf der Außenseite der Lebensmittelkörper vorliegt und die noch nicht miteinander im Rahmen einer Maillardreaktion reagiert haben, sorgen dafür, dass die Maillardreaktion erst vom Endverbraucher auslösbar ist.
Bevorzugt zeichnet sich das erfindungsgemäße Lebensmittelprodukt, insbesondere ein veganer Analogkäse, durch eine helle Farbe aus, die vergleichbar ist mit dem jeweiligen Vergleichsprodukt tierischen Ursprungs, beispielsweise Kuhmilchkäse.

Zur Veranschaulichung des optimierten Bräunungsverhaltens durch die Aufbringung einer Prekursorenmischung wurde ein Standardprodukt ohne Prekursoren und ein Standardprodukt, auf welches bei der Bemehlung ein Anteil von 0,7 Gew.% der beiden Prekursoren gemeinsam mit dem Trägerstoff aufgebracht wurde, im Ofen bei 200 °C (Ober -Unterhitze) für 12min erhitzt und mithilfe eines Farbmessgerätes der unterschiedliche Bräunungsgrad bestimmt. Die Farbwerte werden mithilfe des L*a*b*-Systems (CIE) in folgender Tabelle dargestellt:

| | **Standard ohne Prekurso-ren MW ± SD** | **Standard mit Prekursoren MW ± SD** |
|---|---|---|
| **L** | 53,22 ± 0,12 | 56,21 ± 0,06 |
| **a** | 2,5 ± 0,02 | 4,89 ± 0,01 |
| **b** | 15,25 ± 0,13 | 19,65 ± 0,07 |

Positive a-Werte drücken den Gehalt an rot in der gemessenen Farbe aus. Positive b-Werte drücken den Gehalt an gelb aus. Die höheren a und b-Werte des Standardprodukts mit Prekursoren stehen damit für eine stärkere Bräunung im Vergleich zum Standardprodukt ohne Prekursoren.

Die L-Werte drücken die Luminanz aus. Ein Luminanzwert von 100 entspricht weiß, ein Luminanzwert von 0 entspricht schwarz. Bei einem L-Wert von 50 befindet sich der achromatische Bereich und entspricht stumpf, gräulich wahrgenommenen Farben. Der Standard mit Prekursoren weist somit durch seinen größeren L-Wert einen höheren Farbanteil und weniger Grauanteile im Vergleich zum Standard ohne Prekursoren auf.

In Weiterbildung der Erfindung ist mit Vorteil vorgesehen, dass die Festigkeit der Lebensmittelkörper zwischen 900 und 2800, insbesondere zwischen 973 und 2735 liegt, gemessen mittels eines Texture Analyzers (Model TA-Hdi, Stable Micro Systems, Godalming, UK) mit einer 10 kg Kraftmesszelle, wobei die Festigkeit als die Kraft festgelegt ist, die benötigt wird, um einen Lebensmittelkörper während des Eindringens eines Kraftmesskolbens mit einem Durchmesser von 25mm über eine Eindringtiefe von 2mm zu deformieren.

Die Erfindung beinhaltet auch die Verwendung eines erfindungsgemäßen, bevorzugt mittels eines erfindungsgemäßen Verfahren hergestellten, Lebensmittelproduktes zur Erhitzung, und bevorzugt schmelzen durch ein Verwender, bevorzugt ein Endkunde, insbesondere nach Entpacken des Lebensmittelproduktes, das heißt mehrerer Lebensmittelkörper, aus einer zuvor beschriebenen Endverpackung und dadurch verursachen einer Maillardreaktion zwischen dem ersten und dem zweiten Maillardreaktionsprekursor unter Ausbildung mindestens eines Maillardreaktionsproduktes, insbesondere aus der Gruppe der Melanoidine.

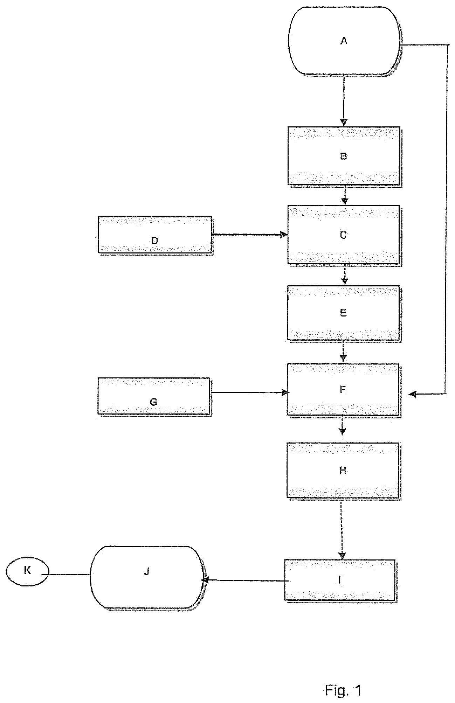

Weitere Vorteile, Merkmale und Einzelheiten der Erfindung ergeben sich aus der nachfolgenden Beschreibung eines bevorzugten Ausführungsbeispiels sowie anhand der einzigen Fig.1.

Diese zeigt einen bevorzugten Ablauf eines erfindungsgemäßen Verfahrens, hier lediglich beispielhaft zur Herstellung von veganen Analogkäseshreds.

In Fig. 1 stellt A das Rohstoff- und Zutatenlager dar. Aus diesem werden Materialien bei B nach jeweiliger Rezeptur verwogen, insbesondere um die im Rahmen des allgemeinen Beschreibungsteils angegebenen Wertebereiche an Protein und/oder Stärke und/oder Fett und/oder Salz zu erhalten. Die abgewogenen Materialien werden unter Zugabe von Wasser aus D in C vermischt und bei E, bevorzugt während gleichzeitiger weiterer Durchmischung unter anderem zur homogeneren Temperaturverteilung, erhitzt, vorliegend auf eine Temperatur von 80 C° bis 90 C°. In die erhitzte Mischung werden aus G bei F weitere Zutateneingemischt, woraus die fertige Grundmasse resultiert, die dann bei H in fließfähiger Form zur Herstellung von Grundkörpern, beispielsweise in Stangen oder Blöcken abgefüllt wird. Daraufhin erfolgt bei I ein Kühlen der Grundkörper, bevorzugt auf eine Temperatur von 2 C° bis 10 C°.

Bei J werden die aus der Grundmasse hergestellten, gekühlten und somit ausgehärteten Grundkörper dann in Lebensmittelkörper, insbesondere so genannte Shreds zerkleinert, die dann bei K zur Reduzierung einer Verklebeneigung mit Trennmittel bemehlt werden, beispielsweise Kartoffelstärke. Nach dem Kühlen, vor und/oder nach und/oder bevorzugt während der Bemehlung mit Trennmittel oder alternativ ohne Zusatz von Trennmittel erfolgt die Zugabe, insbesondere das Bemehlen mit einem ersten und/oder zweiten Maillardreaktionsprekursor, vorzugsweise gemeinsam in einer Mischung mit dem fakultativen Trennmittel. Alternativ ist es möglich, entweder den ersten oder den zweiten Maillardreaktionsprekursor vor dem Kühlen I zuzugeben, insbesondere bei C und/oder E und/oder F.

Die auf ihrer Außenseite mit dem Trennmittel und beiden Maillardreaktionsprekursoren versehenen, insbesondere bemehlten Lebensmittelkörper, vorliegend bevorzugt vegane Analogkäseshreds, werden bei L portionsweise in Endverpackungen verpackt, weiter bevorzugt in Schutzgasatmosphäre. Beispielsweise handelt es sich um Beutelverpackungen. Diese werden dann, insbesondere gekühlt, entweder direkt zum Endkunden im Rahmen eines Versandhandels versandt oder beispielsweise an Supermärkte und dann beim Endkunden zubereitet. Hierzu wird bei M (Verwender) das Lebensmittelprodukt aus der Endverpackung entpackt und derart erhitzt, dass der erste und der zweite Maillardreaktionsprekursor miteinander im Rahmen einer Maillardreaktion zu mindestens einem Maillardreaktionsprodukt, unter anderem aus der Gruppe der Melanoidine reagieren.

Analogkäseshreds, werden bei L portionsweise in Endverpackungen verpackt, weiter bevorzugt in Schutzgasatmosphäre. Beispielsweise handelt es sich um Beutelverpackungen. Diese werden dann, insbesondere gekühlt, entweder direkt zum Endkunden im Rahmen eines Versandhandels versandt oder beispielsweise an Supermärkte und dann beim Endkunden zubereitet. Hierzu wird bei M (Verwender) das Lebensmittelprodukt aus der Endverpackung entpackt und derart erhitzt, dass der erste und der zweite Maillardreaktionsprekursor miteinander im Rahmen einer Maillardreaktion zu mindestens einem Maillardreaktionsprodukt, unter anderem aus der Gruppe der Melanoidinereagieren.

## Patentansprüche

1. Verfahren zum Herstellen eines veganen Lebensmittelproduktes mit einem Proteingehalt zwischen 0 Gew.-% und 3 Gew.-%, bevorzugt eines veganen Käseersatzes, umfassend mehrere aus einer Grundmasse hergestellte Lebensmittelkörper, mit den Schritten:
a) Herstellen der Grundmasse unter Anwendung mindestens eines Erhitzungsschrittes,
b) Formen der Lebensmittelkörper aus der Grundmasse, insbesondere durch Zerkleinern eines aus der Grundmasse geformten, bevorzugt ausgehärteten, Grundkörpers,
**gekennzeichnet durch**
c) Zugabe eines ersten und eines davon unterschiedlichen zweiten Maillardreaktionsprekursors, die sich dadurch auszeichnen, dass diese miteinander bei Wärmeeinwirkung im Rahmen einer Maillardreaktion zu mindestens einem Maillardprodukt, insbesondere aus der Gruppe der Melanoidine reagieren können, wobei der erste und der zweite Maillardreaktionsprekursor nach Abkühlen der Grundmasse und/oder der Lebensmittelkörper auf eine Temperatur von weniger als 35°C auf die Lebensmittelkörper, zugegeben werden/wird,
d) Reduzieren der Verklebeneigung der Lebensmittelkörper durch Zugabe eines Trennmittels nach dem Abkühlen, wobei die beider Maillardreaktionsprekursoren gemeinsam mit dem Trennmittel in Form einer Trennmittel-Maillardreaktionsprekursormischung zugegeben werden,
e) Verpacken des Lebensmittelproduktes mit den nicht miteinander reagierten Maillardreaktionsprekursoren in eine, bevorzugt eine Sperrwirkung gegen Feuchtigkeits- und/oder Sauerstoffdurchtritt aufweisenden, bevorzugt mindestens eine Kunststoffschicht und/oder eine Metallschicht umfassenden, Verpackung, insbesondere Verbraucher-Endverpackung.

2. Verfahren nach Anspruch 1,
**dadurch gekennzeichnet,**
**dass** der erste Maillardreaktionsprekursor eine Verbindung mit einer freien Carbonylgruppe umfasst und dass der zweite Maillardreaktionsprekursor eine Aminverbindung umfasst oder daraus besteht.

3. Verfahren nach Anspruch 2
**dadurch gekennzeichnet,**
**dass** der erste Maillardreaktionsprekursor eine Verbindung oder mehrere unterschiedliche Verbindungen aus der folgenden Gruppe von Verbindungen umfasst oder daraus besteht: reduzierender Zucker wie Glukose, Maltose, Fructose, Lactose, Oligosaccharid, Pentose, Dextrose, Maltodextrin, ein Lipidoxidationsprodukt, Produkt aus dem Abbau von Polyphenolen und/oder fermentativen Vorgängen, und dass der zweite Maillardreaktionsprekursor eine Verbindung oder mehrere unterschiedliche Verbindungen aus der folgenden Gruppe von Verbindungen umfasst oder daraus besteht: Protein, Peptid, Aminosäure, Amin.

4. Verfahren nach einem der vorhergehenden Ansprüche,
**dadurch gekennzeichnet,**
**dass** die Grundmasse und/oder das Lebensmittelprodukt mit einem Stärkegehalt zwischen 10-42 Gew.-%, insbesondere zwischen 18 und 24 Gew.-% und/oder mit einem Fettgehalt zwischen 10 und 35 Gew.-% insbesondere zwischen 20-25 Gew.-% und/oder einem Salzgehalt zwischen 1 und 5 Gew.-%, insbesondere zwischen 2 und 3 Gew.-% und/oder einem Wassergehalt zwischen 35 und 75 Gew.-% hergestellt werden/wird.

5. Verfahren nach einem der vorhergehenden Ansprüche,
**dadurch gekennzeichnet,**
**dass** der erste und/oder der zweite Maillardreaktionsprekursor in Pulverform zugegeben wird/werden.

6. Verfahren nach einem der vorhergehenden Ansprüche,
**dadurch gekennzeichnet,**
**dass** der erste und/oder der zweite Maillardreaktionsprekursor auf mindestens einem pulverförmigen Trägerstoff, insbesondere Maltodextrin und/oder Natriumchlorid und/oder Glukose und/oder Saccharose und/oder Stärke appliziert zugegeben wird/werden.

7. Verfahren nach einem der vorhergehenden Ansprüche,
**dadurch gekennzeichnet,**
**dass** die Lebensmittelkörper bei der Zugabe des ersten und/oder zweiten Maillardreaktionsprekursors durch Abkühlung der Grundmasse und/oder der Lebensmittelkörper nach dem Erhitzungsschritt eine Temperatur aus einem Bereich zwischen 0°C und 30°C, weiter bevorzugt zwischen 2°C und 10°C aufweisen.

8. Verfahren nach einem der vorhergehenden Ansprüche,
**dadurch gekennzeichnet,**
**dass** das Lebensmittelprodukt derart ausgebildet ist, dass mit diesem ein Lebensmittel durch einen Endverbraucher durch Schmelzen des Lebensmittelproduktes überbackbar ist.

9. Verfahren nach einem der vorhergehenden Ansprüche,
**dadurch gekennzeichnet,**
**dass** der erste Maillardreaktionsprekursor in einer Menge zugegeben wird, dass der Gewichtsprozentanteil des ersten Maillardreaktionsprekursors am Lebensmittelprodukt zwischen 0,002 und 0,4 Gew.-%, insbesondere zwischen 0,14 und 0,2 Gew.-% beträgt und/oder dass der zweite Maillardreaktionsprekursor in einer Menge zugegeben wird, dass der Gewichtsprozentanteil des zweiten Maillardreaktionsprekursors am Lebensmittelprodukt zwischen 0,002 und 0,4 Gew.-%, insbesondere zwischen 0,14 und 0,2 Gew.-% beträgt.

10. Verpacktes, insbesondere endverpacktes, veganes Lebensmittelprodukt mit einem Proteingehalt zwischen 0 Gew.-% und 3 Gew.-%, insbesondere veganer Käseersatz, bevorzugt erhalten durch Ausführung eines Verfahrens nach einem der vorhergehenden Ansprüche, umfassend mehrere aus einer Grundmasse hergestellte Lebensmittelkörper, bevorzugt in Streifen-, Stift-, Würfel-, oder Scheibenform, **dadurch gekennzeichnet, dass**
das Lebensmittelprodukt einen ersten und einen davon unterschiedlichen zweiten Maillardreaktionsprekursor enthält, die sich dadurch auszeichnen, dass diese miteinander bei Wärmeeinwirkung im Rahmen einer Maillardreaktion zu mindestens einem Maillardreaktionsprodukt, insbesondere aus der Gruppe der Melanoidine, reagieren können, die jedoch noch nicht miteinander reagiert haben, und dass sich der erste und der zweite Maillardreaktionsprekursor zusammen mit einem Trennmittel zur Reduzierung der Verklebeneigung der Lebensmittelkörper, außerhalb der Lebensmittelkörper befinden.

11. Verpacktes Lebensmittelprodukt nach Anspruch 10, **gekennzeichnet durch** einen Stärkegehalt zwischen 10-42 Gew.-%, insbesondere zwischen 18 und 24 Gew.-% und/oder einen Fettgehalt zwischen 10 und 35 Gew.-% insbesondere zwischen 5-40 Gew.-%, bevorzugt zwischen 20-25 Gew.-% und/oder einen Salzgehalt zwischen 1 und 5 Gew.-%, insbesondere zwischen 2 und 3 Gew.-% und/oder einen Wassergehalt zwischen 35 und 75 Gew.-%.

12. Verwendung eines Lebensmittelproduktes nach einem der Ansprüche 10 bis 11 zur Erhitzung, und bevorzugt Schmelzen, durch einen Verwender, insbesondere Endverbraucher, nach einem Entpacken des Lebensmittelproduktes aus einer Verpackung, insbesondere einer Endverpackung, und dadurch Verursachen einer Maillardreaktion zwischen dem ersten und dem zweiten Maillardreaktionsprekursor unter Ausbildung mindestens eines Maillardreaktionsproduktes, insbesondere aus der Gruppe der Melanoidine.

## Claims

1. A method for producing a vegan food product, preferably a vegan cheese substitute, having a protein content between 0 wt.-% and 3 wt.-% and comprising several food product bodies produced from a base mass, the method comprising the steps of:
a) producing the base mass using at least one heating step,
b) forming the food product bodies from the base mass, in particular by comminuting a, preferably cured, base body formed from the base mass,
**characterized by**
c) adding a first and a different second Maillard reaction precursor which are **characterized in that** they can react with one another in a Maillard reaction during heat exposure to form at least one Maillard product, in particular from the group of melanoidins, the first and the second Maillard reaction precursor being added to the food product bodies after cooling of the base mass and/or of the food product bodies to a temperature of less than 35 °C,
d) reducing the adhesion tendency of the food product bodies by adding a release agent after the cooling, the two Maillard reaction precursors being added together with the release agent in the form of a Maillard reaction precursor mix,
e) packaging the food product comprising the Maillard reaction precursors not reacted with one another into a packaging, in particular a final consumer packaging, preferably having a barrier effect against the passage of moisture and/or oxygen, preferably comprising at least one plastic layer and/or a metal layer.

2. The method according to claim 1,
**characterized in that**
the first Maillard reaction precursor comprises a compound with a free carbonyl group and that the second Maillard reaction precursor comprises or consists of an amine compound.

3. The method according to claim 2,
**characterized in that**
the first Maillard reaction precursor comprises or consists of one compound or several different compounds from the following group of compounds: reducing sugar such as glucose, maltose, fructose, lactose, oligosaccharide, pentose, dextrose, maltodextrin, a lipid oxidation product, a product of the degradation of polyphenols and/or of fermentative processes, and that the second Maillard reaction precursor comprises or consists of one compound or several different compounds from the following group of compounds: protein, peptide, amino acid, amine.

4. The method according to any one of the preceding claims,
**characterized in that**
the base mass and/or the food product is/are produced having a starch content between 10 wt.-% and 42 wt.-%, in particular between 18 wt.-% and 24 wt.-%, and/or having a fat content between 10 wt.-% and 35 wt.-% in particular between 20 wt.-% and 25 wt.-%, and/or a salt content between 1 wt.-% and 5 wt.-%, in particular between 2 wt.-% and 3 wt.-%, and/or a water content between 35 wt.-% and 75 wt.-%.

5. The method according to any one of the preceding claims,
**characterized in that**
the first and/or the second Maillard reaction precursor is/are added in powdered form.

6. The method according to any one of the preceding claims,
**characterized in that**
the first and/or the second Maillard reaction precursor is/are added being applied to at least one powdery carrier substance, in particular maltodextrin and/or sodium chloride and/or glucose and/or sucrose and/or starch.

7. The method according to any one of the preceding claims,
**characterized in that**
when the first and/or second Maillard reaction precursor is added, the food product bodies have a temperature from a range between 0 °C and 30 °C, particularly preferably between 2 °C and 10 °C, by cooling of the base mass and/or of the food product bodies after the heating step.

8. The method according to any one of the preceding claims,
**characterized in that**
the food product is realized in such a manner that a consumer can gratinate food with said food product by melting said food product.

9. The method according to any one of the preceding claims,
**characterized in that**
the first Maillard reaction precursor is added in such an amount that the percentage by weight of the first Maillard reaction precursor in the food product is between 0.002 wt.-% and 0.4 wt.-%, in particular between 0.14wt.-% and 0.2 wt.-%, and/or that the second Maillard reaction precursor is added in such an amount that the percentage by weight of the second Maillard reaction precursor in the food product is between 0.002 wt.-% and 0.4 wt.-%, in particular between 0.14 wt.-% and 0.2 wt.-%.

10. A packaged, in particular finally packaged, vegan food product, in particular a vegan cheese substitute, having a protein content between 0 wt.-% and 3 wt.-%, preferably obtained by carrying out a method according to any one of the preceding claims, comprising several food product bodies produced from a base mass, preferably in the form of stripes, sticks, cubes or slices,
**characterized in that**
the food product has a first and a different second Maillard reaction precursor which are **characterized in that** they can react with one another in a Maillard reaction during heat exposure to form at least one Maillard reaction product, in particular from the group of melanoidins, but which have not yet reacted with one another, and that the first and the second Maillard reaction precursor together with a release agent for reducing the adhesion tendency of the food product bodies being located outside the food product bodies.

11. The packaged food product according to claim 10, **characterized by** a starch content between 10 wt.-% and 42 % wt.-%, in particular between 18 wt.-% and 24 wt.-% and/or a fat content between 10 wt.-% and 35 wt.-%, in particular between 5 wt.-% and 40 wt.-%, preferably between 20 wt.-% and 25 wt.-% and/or a salt content between 1 wt.-% and 5 wt.-%, in particular between 2 wt.-% and 3 wt.-% and/or a water content between 35 wt.-% and 75 wt.-%.

12. A use of a food product according to claim 10 or 11 for heating, and preferably melting, by a user, in particular a final consumer, after unpacking the food product from a packaging, in particular a final packaging, and thus causing a Maillard reaction between the first and the second Maillard reaction precursor to form at least one Maillard reaction product, in particular from the group of melanoidins.

## Revendications

1. Procédé pour la production d'un produit alimentaire végétalien, de préférence un substitut de fromage végétalien, ayant une teneur en protéines entre 0 % en poids et 3 % en poids et comprenant plusieurs corps de produit alimentaire composés d'une masse de base, le procédé comprenant les étapes suivantes :
a) produire une masse de base par l'application d'au moins une étape de chauffage,
b) former les corps de produit alimentaire de la masse de base, notamment par le broyage d'un corps de base, de préférence durci, formé de la masse de base,
**caractérisé par**
c) ajouter un premier et un différent deuxième précurseur de réaction de Maillard qui sont **caractérisés en ce que** le premier précurseur de réaction de Maillard réagit avec le deuxième précurseur de réaction de Maillard sous l'effet de la chaleur dans le cadre d'une réaction de Maillard pour former au moins un produit de Maillard, notamment parmi le groupe de melanoïdines, le premier et le deuxième précurseur de réaction de Maillard étant ajoutés après le refroidissement de la masse de base et/ou des corps de produit alimentaire à une température inférieure à 35 °C,
d) réduire la tendance au collage des corps de produit alimentaire par l'ajout d'un agent de démoulage après le refroidissement, les deux précurseurs de réaction de Maillard étant ajoutés conjointement avec l'agent de démoulage en forme d'un mélange agent de démoulage-précurseurs de réaction de Maillard,
e) emballer le produit alimentaire comprenant les précurseurs de réaction de Maillard non-réagis dans un emballage, notamment un emballage final de consommateur, qui a, de préférence, un effet barrière contre le passage d'humidité et/ou d'oxygène et qui comprend, de préférence, au moins une couche de matière plastique et/ou une couche de métal.

2. Procédé selon la revendication 1,
**caractérisé en ce que**
le premier précurseur de réaction de Maillard comprend un composé d'un groupe carbonyle libre et **en ce que** le deuxième précurseur de réaction de Maillard comprend ou est composé d'un composé amine.

3. Procédé selon la revendication 2,
**caractérisé en ce que**
le premier précurseur de réaction de Maillard comprend ou est composé d'un composé ou des plusieurs composés différents parmi le groupe de composés suivant : sucre réducteur tel que glucose, maltose, fructose, lactose, oligosaccharide, pentose, dextrose, maltodextrine, un produit d'oxydation des lipides, un produit de la dégradation des polyphénols et/ou des opérations fermentatives, et **en ce que** le deuxième précurseur de réaction de Maillard comprend ou est composé d'un composé ou des plusieurs composés différents parmi le groupe de composés suivant : protéine, peptide, acide aminé, amine.

4. Procédé selon l'une quelconque des revendications précédentes,
**caractérisé en ce que**
la masse de base et/ou le produit alimentaire est/sont produit(e/s) ayant une teneur en fécule entre 10 % en poids et 42 % en poids, notamment entre 18 % en poids et 24 % en poids, et/ou une teneur en graisse entre 10 % en poids et 35 % en poids, notamment entre 20 % en poids et 25 % en poids, et/ou une teneur en sel entre 1 % en poids et 5 % en poids, notamment entre 2 % en poids et 3 % en poids, et/ou une teneur en eau entre 35 % en poids et 75 % en poids.

5. Procédé selon l'une quelconque des revendications précédentes,
**caractérisé en ce que**
le premier et/ou le deuxième précurseur de réaction de Maillard est/sont ajouté(s) en forme de poudre.

6. Procédé selon l'une quelconque des revendications précédentes,
**caractérisé en ce que**
le premier et/ou le deuxième précurseur de réaction de Maillard est/sont ajouté(s) de manière à être appliqué(s) à au moins un support en forme de poudre, notamment maltodextrine et/ou chlorure de sodium et/ou glucose et/ou saccharose et/ou fécule.

7. Procédé selon l'une quelconque des revendications précédentes,
**caractérisé en ce que**
les corps de produit alimentaire ont une température d'une plage entre 0 °C et 30 °C, de préférence entre 2 °C et 10 °C, par le refroidissement de la masse de base et/ou des corps de produit alimentaire après l'étape de chauffage quand le premier et/ou le deuxième précurseur de réaction de Maillard est/sont ajouté(s).

8. Procédé selon l'une quelconque des revendications précédentes,
**caractérisé en ce que**
le produit alimentaire est réalisé de telle manière qu'un aliment peut être gratiné au moyen dudit produit alimentaire par un consommateur final par la fusion du produit alimentaire.

9. Procédé selon l'une quelconque des revendications précédentes,
**caractérisé en ce que**
le premier précurseur de réaction de Maillard est ajouté en une telle quantité que le rapport de poids du premier précurseur de réaction de Maillard au produit alimentaire est entre 0,002 % en poids et 0,4 % en poids, notamment entre 0,14 % en poids et 0,2 % en poids, et/ou **en ce que** le deuxième précurseur de réaction de Maillard est ajouté en une telle quantité que le rapport de poids du deuxième précurseur de réaction de Maillard au produit alimentaire est entre 0,002 % en poids et 0,4 % en poids, notamment entre 0,14 % en poids et 0,2 % en poids.

10. Produit alimentaire végétalien emballé, notamment emballé de manière finale, ayant une teneur en protéine entre 0 % en poids et 3 % en poids, notamment un substitut de fromage, de préférence obtenu par la réalisation d'un procédé selon l'une quelconque des revendications précédentes, le produit alimentaire végétalien emballé comprenant plusieurs corps de produit alimentaire composés d'une masse de base, de préférence en forme de bande, de bâton, de cube ou de disque,
**caractérisé en ce que**
le produit alimentaire contient un premier et un différent deuxième précurseur de réaction de Maillard qui sont **caractérisés en ce que** le premier précurseur de réaction de Maillard réagit avec le deuxième précurseur de réaction de Maillard sous l'effet de la chaleur dans le cadre d'une réaction de Maillard pour former au moins un produit de réaction de Maillard, notamment parmi le groupe de melanoïdines, mais qui n'ont pas encore réagis l'un avec l'autre, et **en ce que** le premier et le deuxième précurseur de réaction de Maillard et un agent de démoulage destiné à la réduction de la tendance au collage des corps de produit alimentaire sont en dehors des corps de produit alimentaire.

11. Produit alimentaire emballé selon la revendication 10,
**caractérisé par** une teneur en fécule entre 10 % en poids et 42 % en poids, notamment entre 18 % en poids et 24 % en poids, et/ou une teneur en graisse entre 10 % en poids et 35 % en poids, notamment entre 5 % en poids et 40 % en poids, de préférence entre 20 % en poids et 25 % en poids, et/ou une teneur en sel entre 1 % en poids et 5 % en poids, notamment entre 2 % en poids et 3 % en poids, et/ou une teneur en eau entre 35 % en poids et 75 % en poids.

12. Utilisation d'un produit alimentaire selon la revendication 10 ou la revendication 11 pour le chauffage, et de préférence la fusion, par un consommateur, notamment un consommateur final, après un déballage du produit alimentaire d'un emballage, notamment un emballage final, et donc l'entraînement d'une réaction de Maillard entre le premier et le deuxième précurseur de réaction de Maillard en réalisant au moins un produit de réaction de Maillard, notamment parmi le groupe de melanoïdines.
